# EUROPEAN PATENT SPECIFICATION

(11) **EP 3 708 742 B1**
(45) Date of publication and mention of the grant of the patent: **02.06.2021**
(21) Application number: 20158750.8
(22) Date of filing: 21.02.2020
(51) Int. Cl.: E04H 17/16

(54) **FIXED GUARD WITH IMPROVED ASSEMBLY MEANS**
FESTER SCHUTZ MIT VERBESSERTEN MONTAGEMITTELN
PROTECTION FIXE AVEC SUPPORTS D'ASSEMBLAGE AMÉLIORÉS

(30) Priority: 13.03.2019 IT 201900003643
(43) Date of publication of application: 16.09.2020
(73) Proprietor: Trentaquattrotrentotto Srl, 23879 Verderio (LC) (IT)
(72) Inventor: Citterio, Guido Emilio, 23899 Robbiate (LC) (IT)
(74) Representative: Zanoli, Enrico

(56) References cited:
- EP-A1- 2 243 903
- EP-A1- 2 657 435
- US-A1- 2006 175 590

## Description

The present invention relates to a fixed guard with improved assembly and fixing means.

There are known fixed guards destined to demarcate areas of factories or industrial sheds, building sites and the like, to prevent unauthorized persons from entering dangerous areas, or areas that unauthorized persons are prohibited from accessing, so that access to these areas only takes place through suitably controlled gates.

These fixed guards are formed of a plurality of panels supported by uprights, which are fixed to the floor or to the ground. Each panel is fixed to a pair of uprights; each panel-upright assembly normally comprises at least one upper fixing point and one lower fixing point. There are European regulations that establish the requirements with which these guards must comply, for example that it must be possible to carry out assembly and fixing of the components using tools, and that if the upper fixing is missing the panel must not remain in position, but fall under the effect of the force of gravity, so that during assembly it is not possible to forget to fix the upper part of the panels to the uprights, in this way leaving the area accessible.

Moreover, a reduction in the possible loss of components is normally required, i.e., avoiding the using components that can be accidentally lost during assembly, with the risk of delays during the setting up of a guard, tampering and reducing safety.

One type of panel commonly used to create fixed guards consists of a net without frame, fixed to the uprights by appropriately shaped plates, provided with holes for screws or bolts that are screwed into corresponding threaded holes of the uprights. The net is rigid and typically is a metal net formed with stiffening ribs which extend horizontally through the whole panel. In vertical direction the ribs have a polygonal profile, usually an isosceles trapezoidal profile formed by a trio of net meshes, two which form the oblique sides and one which forms the smaller base of the trapezium.

Fixing of the net to the uprights normally takes place in two steps, the first of which involves pre-assembly, i.e., consists of coupling the plates to the ribs of the net and inserting the fixing screws or bolts therein, while the second involves fixing the plates to the vertical uprights of the guard by screwing the screws or bolts into corresponding holes provided on the uprights. A drawback from which known guards suffer is the relative complexity and inconvenience of carrying out the pre-assembly step, i.e., of mounting the fixing plate to the net forming the panel. In particular, there is the risk of losing both the plate and the associated screw or bolt due to detachment before carrying out fixing to the upright of the guard.

EP 2 243 903 B1 describes a fixing system for a demarcation barrier of the type described above, comprising shaped metal plates, each formed with a pair of hooks at opposite ends, adapted to receive a pair of horizontal wires of the net in correspondence of each rib. The plate is also provided with a slot for the passage of a bolt temporarily retained in the slot by an unconstrained washer.

EP 2 657 435 A1 describes a fixed guard according to the preamble of claim 1.

Although advantageous from certain points of view, these solutions nonetheless have some drawbacks. In particular, the structure described does not eliminate the risk of loss, as it is possible for the wires of the net inserted in the hooks of the plate to become detached therefrom before being fixed to the upright or during removal following maintenance operations. Moreover, the use of a washer does not ensure that the bolt will not be lost.

The aim of the present invention is to eliminate or reduce the drawbacks of the prior art. More in particular, an object of the invention is to provide a fixed guard the components of which cannot be lost, i.e., which cannot be easily detached, before final assembly of the guard or during removal of a panel for maintenance purposes.

In accordance with the invention, this problem is solved by a fixed guard comprising one or more panels, each supported by a pair of uprights, in which each panel consists of a rigid net without frame, formed by a series of ribs with a polygonal profile, which protrude from the plane of said net and which, in the mounted operational arrangement of the guard extend horizontally through the panel and are spaced vertically, and in which said panels are fixed by removable plates to said uprights in correspondence of said ribs, in which each of said plates has a fixing side for fixing to said net and fixing means for fixing to said upright, characterized in that each of said plates is made of synthetic resin and that in said fixing side there is a polygonal groove which corresponds to the polygonal profile of said ribs of the net and extends along a perimeter portion of said plate, and a pair of recesses that starting from said perimeter portion extend up to said groove, said groove and said recesses being operationally coupled by interference to a portion of wire of said net, as a result of the relative compliance of the synthetic resin of which the plate is made.

According to an aspect of the invention, the fixed guard comprises a panel that consists of a rigid net formed by ribs, the polygonal profile of which is a profile in the shape of an isosceles trapezium, and in which the plate has a fixing side provided with a groove which has a shape of an isosceles trapezium that corresponds to the profile of a rib of the net.

More in particular, the isosceles trapezoidal profile of each rib is defined by a trio of net meshes, in which the trio of meshes that define the perimeter edge of the net contains the portion of vertical wire operationally housed in the groove, such that the plate is coupled by interference to the net.

According to a further aspect of the invention each plate has the shape of an isosceles trapezium with the larger base lying in the plane of the net and the smaller base lying outside the plane of the net, and in which the groove in the shape of an isosceles trapezium provided in the fixing side extends along the perimeter portion of the plate consisting of the oblique sides and of the smaller base in the shape of an isosceles trapezium.

According to yet another aspect of the invention, the pair of recesses that from the perimeter portion of the plate extend up to the groove are made at the corners between the oblique sides and the smaller base of the plate in the shape of an isosceles trapezium.

According to yet another aspect of the invention, the fixing means for fixing to the vertical upright of the guard comprise a screw insertable into a hole provided in said plate, adapted to be operatively screwed into a corresponding hole of said upright. In a different embodiment, said hole is provided in a bracket which in turn is fixed to the trapezium shaped plate. According to a further aspect of the invention, during pre-assembly there is inserted into the hole of the plate a screw or bolt comprising a stem with a diameter smaller than the diameter of the hole, and a threaded end part having a diameter slightly larger than the diameter of said hole but forcibly insertable into said hole due to the relative compliance of the synthetic resin of which the plate is formed.

With the structure described above the panel is pre-assembled with the fixing plate and the fixing screw or bolt to prevent loss.

Further characteristics and advantages of the present invention will be more apparent from the description of preferred, but not exclusive, embodiments shown by way of non-limiting example in the accompanying drawings, wherein:
- Fig. 1 is an exploded perspective view of a guard according to the invention;
- Fig. 2 is a perspective view of a plate which is part of the guard of Fig. 1;
- Fig. 3 is a perspective view of one side of the plate of Fig. 2;
- Fig. 4 is a side elevation view of the plate of Figs. 2 and 3;
- Figs. 5, 6, 7 and 8 show the sequence of operations for fixing the plate of Figs. 2 to 4 to obtain the pre-assembled panel of Fig. 1;
- Fig. 9 is a perspective view of the fixing of a panel to an upright of the guard according to the invention; and
- Figs. 10, 10A and 10B show a different embodiment of the guard according to the invention.

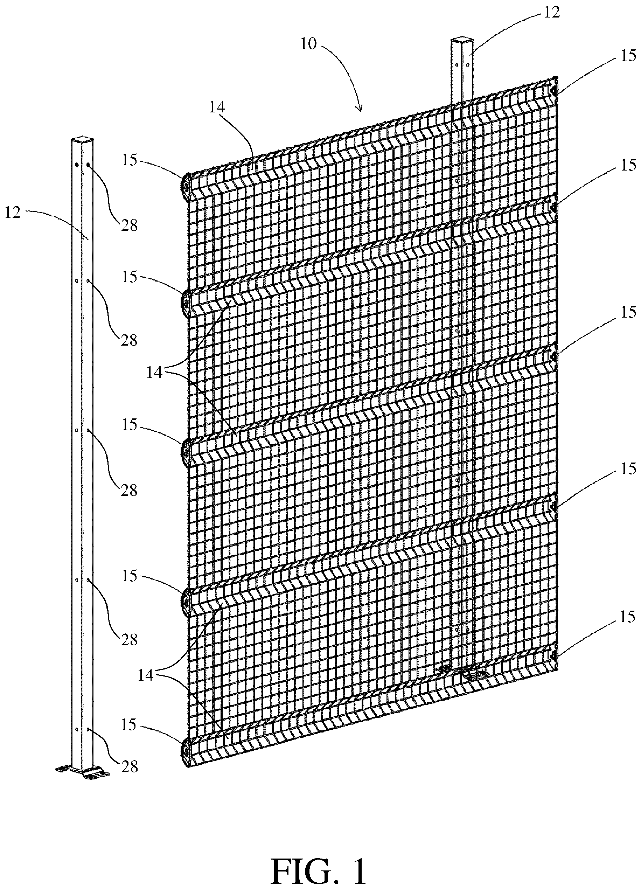

With reference to Fig. 1, the fixed guard of the type according to the present invention comprises at least one panel 10 fixed to at least one pair of uprights 12. Naturally, the guard can comprise a plurality of panels, each fixed to a pair of uprights, in which each upright can support several panels. The uprights 12 and the panels 10 are originally separated and can be mutually fixed in a removable manner but with the possibility of temporarily removing a panel for any maintenance required.

Each panel 10 is of known type and consists of a rigid net without frame, typically made of metal material and of mesh type, capable of preventing unauthorized persons from entering fenced areas, for example areas with industrial factories containing machinery or plants, or areas of building sites requiring protection.

Hereinafter in the description, the terms "panel" and "net" are used interchangeably, as they define the same component of the guard.

The net 10 is formed by a series of parallel ribs 14, which pass horizontally through the whole panel and protrude from the plane of the net with a polygonal profile. At the sides of the net and in correspondence of the ribs 14 plates 15 are fixed, also called fixing plates, destined to be fixed in turn to the uprights 12 to produce the final assembly of the guard.

More particularly, the polygonal profile of the ribs 14 has the shape of a trapezium, preferably of an isosceles trapezium. Consequently, also each plate 15 has a polygonal shape corresponding to the shape of the ribs 14, and preferably has the shape of an isosceles trapezium.

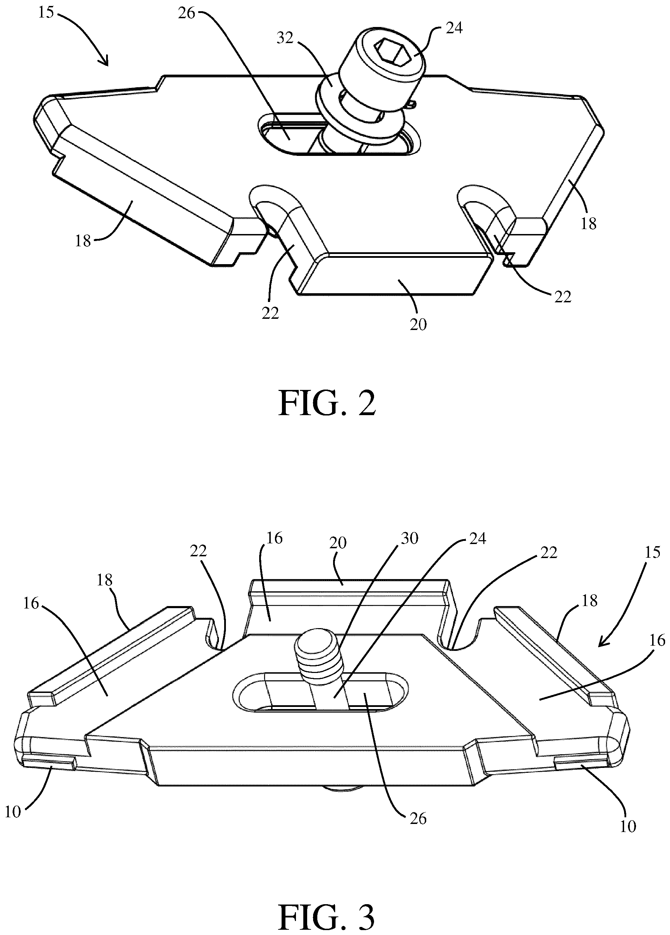

Figs. 2, 3 and 4 show the structure of the plate 15, which substantially has the shape of an isosceles trapezium, similar to the profile of the ribs 14 of the net 10.

Fig. 3 shows in particular the fixing side for fixing the plate 15 to net 10. This side of the plate 15 is provided with a groove 16 corresponding in shape to the polygonal profile of the ribs 14 of the net 10, more particularly the groove 16 has the shape of an isosceles trapezium corresponding to the isosceles trapezoidal profile of the ribs 14.

The groove 16 extends along a perimeter portion of the plate 15, more particularly along the oblique sides 18 and the smaller base 20 of the plate 15, and in proximity thereto.

The plate 15 is also provided with a pair of recesses 22 that starting from the perimeter portion of the plate extend up to the groove 16.

According to a preferred embodiment, the pair of recesses 22 is made at the corners between the oblique sides 18 and the smaller base 20 of the plate 15, when it has the shape of an isosceles trapezium.

The plate 15 comprises fixing means for fixing to the vertical upright 12 of the guard consisting of a screw 24 that can be inserted into a through hole 26 provided in the plate, in order to allow fixing in a corresponding threaded hole 28 of the upright 12 (Fig. 1). The hole 26 is preferably a slotted hole, adapted to allow adjustment of the position of the plate 15 with respect to the upright 12.

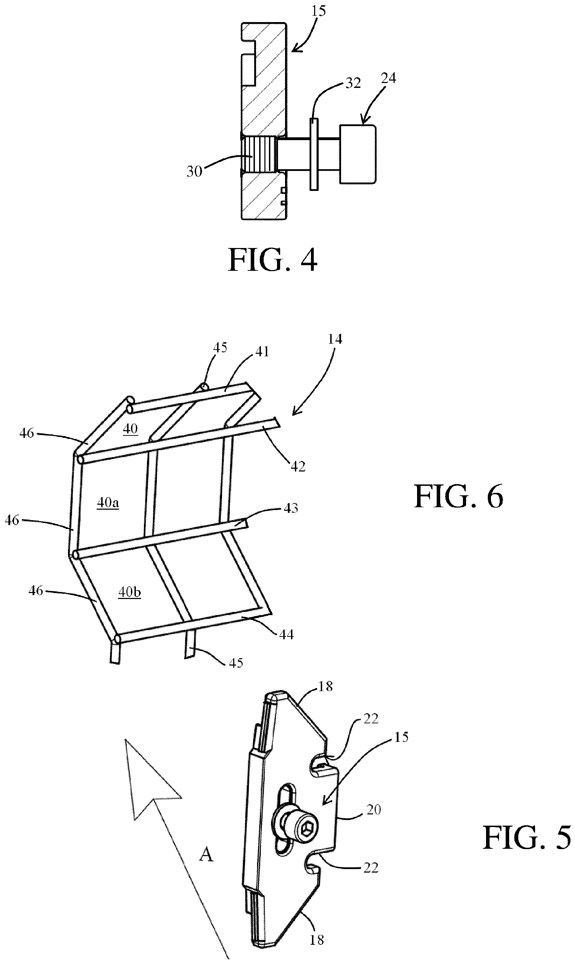

According to an aspect of the invention, the screw or bolt 24 comprises a stem with a diameter smaller than the diameter of the hole 26, and a threaded end part 30, having a diameter slightly larger than the diameter of the hole 26, but forcibly inserted therein as a result of the relative compliance of the synthetic resin of which the plate is made. As is shown in Fig. 4, the screw 24 is inserted into the hole 26 of the plate during pre-assembly, and cannot be lost as it cannot be removed from the hole 26 without applying a considerable tensile force. A washer 32 allows the screw to be appropriately clamped in the hole 28 of the upright 12.

Figs. 6, 7 and 8 show the sequence of coupling the plate 15 to the rib 14 of the net 10.

The rib 14 consists of a series of trios of net meshes having in combination an isosceles trapezoidal profile. The trio of meshes 40, 40a, 40b is placed on the perimeter edge of the net. It is formed of four horizontal net wires 41, 42, 43 and 44 and two vertical net wires 45 and 46, the latter all having an isosceles trapezoidal profile, just as all the vertical wires that form each rib 14. The outermost portion of wire 46 of the rib 14 is destined to couple to the groove 16 of the plate 15, the isosceles trapezoidal profile of which substantially copies the shape of the filo 46.

Figs. 5, 6, 7 and 8 show the sequence of operations for fixing the plate 15 to the net 10 to obtain the pre-assembled panel of Fig. 1.

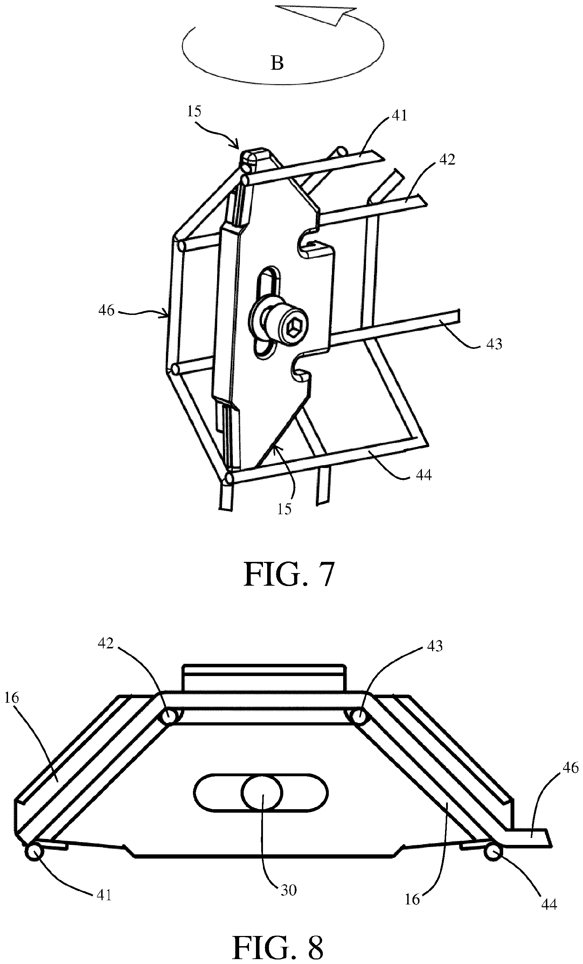

Figs. 5 and 6 show the plate 15 moving toward the rib 14 according to the direction of the arrow A, and Fig. 7 shows insertion of the plate 15 between the upper 41 and lower 44 horizontal wires, with the end of the larger base of the plate in contact with the outer wire 46 of the rib 14. By performing a rotation of the plate according to the direction of the arrow B this determines the coupling thereof the wires forming the rib 14, as shown in Fig. 8. This coupling is obtained through interference between the plate 15 and wires of the net that form the rib 14. In fact, the outer vertical wire 46 is housed in the groove 16 of the plate, the upper 41 and lower 44 horizontal wires are abutting against the end of the larger base of the plate, and the intermediate horizontal wires 42 and 44 are inserted into the recesses 22 of the plate 15. The dimensions of the plate 15 with respect to the dimensions of the trio of meshes 40, 40a, 40b are such as to require a pressure to be exerted at the end of the rotation defined by the arrow B to obtain coupling through interference of the plate with the rib 14, hence fixing thereof to the net 10. Similarly, by exerting an opposite pressure the plate 15 can be decoupled from the rib 14, if the fixed guard requires to be removed. In this case all that is necessary is to unscrew the screws and remove the panel. The fixing plates will remain constrained to the panel equipped with the non removable screws.

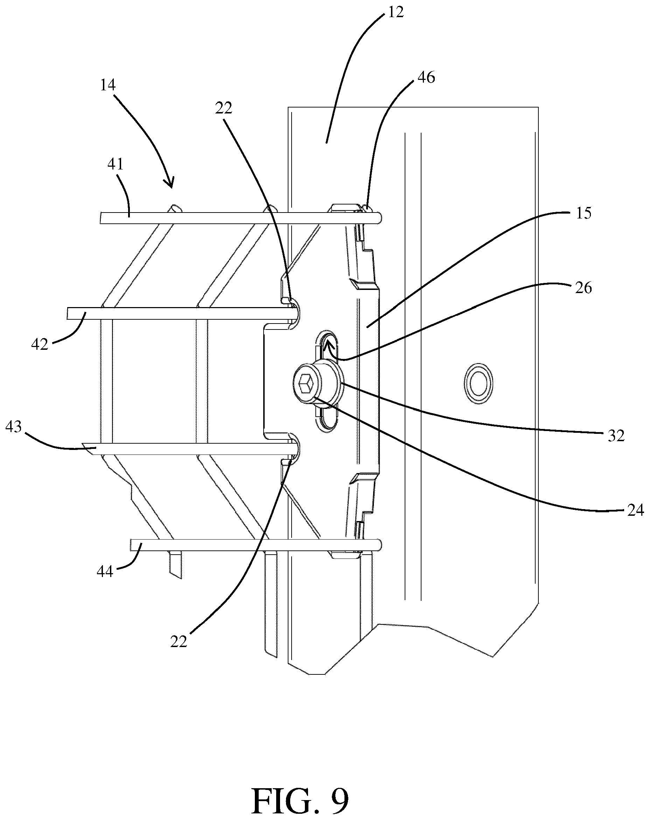

As can be seen in Figs. 6, 7 and 8, but also in the subsequent Fig. 9 and in Fig. 1, when the plate 15 is fixed to the net 10, it is arranged with the larger base lying in the plane of the net and the smaller base, or side 20, lying outside the plane of the net, parallel to the stretch of outer wire 46 of the net that forms the intermediate mesh 40a. The oblique stretches of the outer wire 46 are instead parallel to the oblique sides 18 of the plate 15.

Therefore, it is clear that the panel can be assembled before being fixed to the upright 12, i.e., the plates 15 can be fixed to the net 10 in a manner to prevent loss, with the screws 24 inserted in the holes 26 in a manner to prevent loss, as a result of the slightly smaller dimension of the threaded part 30 with respect to the dimension of the hole 26. This latter characteristic is possible as a result of the synthetic material of which the plate 15 is made. In fact, this material allows the forced insertion of the screw into the hole as a result of the partial compliant or deformable nature of this material. It is chosen so as to guarantee in any case a high mechanical strength. A preferred synthetic resin is polyamide, although other resins belonging to the family of polymers with high mechanical properties, such as ABS (Acrylonitrile-Butadiene-Styrene) resins, can be used.

An advantage of the invention is therefore to be able to pre-assemble the panel before mounting it on the uprights of the guard, and also to be able to transport the panel thus assembled, without the risk of losing its components. Moreover, this pre-assembly is facilitated by coupling by interference between net and plate, which simply requires forced insertion of the plate into the mesh of the net.

Fig. 9 shows fixing of the plate 15, and hence of the net 10, to the panel 12 of the guard. The screw 24 is inserted into the slotted hole 26 and is screwed in the hole 28 (Fig. 1) of the upright 12. The outer wire 46 of the net is blocked between the plate 15 and the upright 10, in a simple and secure manner.

Mounting of the guard therefore requires fixing of all the plates used to the respective uprights, which are provided with threaded holes (inserts) spaced like the ribs 14 of the net 10, as shown in Fig. 1. This operation can be carried out easily also due to the slotted shape of the hole 26, which allows vertical adjustment of the fixing to the upright 12, in consideration of the fact that the flooring of industrial sheds or building sites is not always perfectly flat. The upright 12 as a rule consists of a metal tube with a rectangular or square section, designed and made to be structurally capable of supporting a plurality of panels 10. It is connected to the ground by means of plates, as is known in the art.

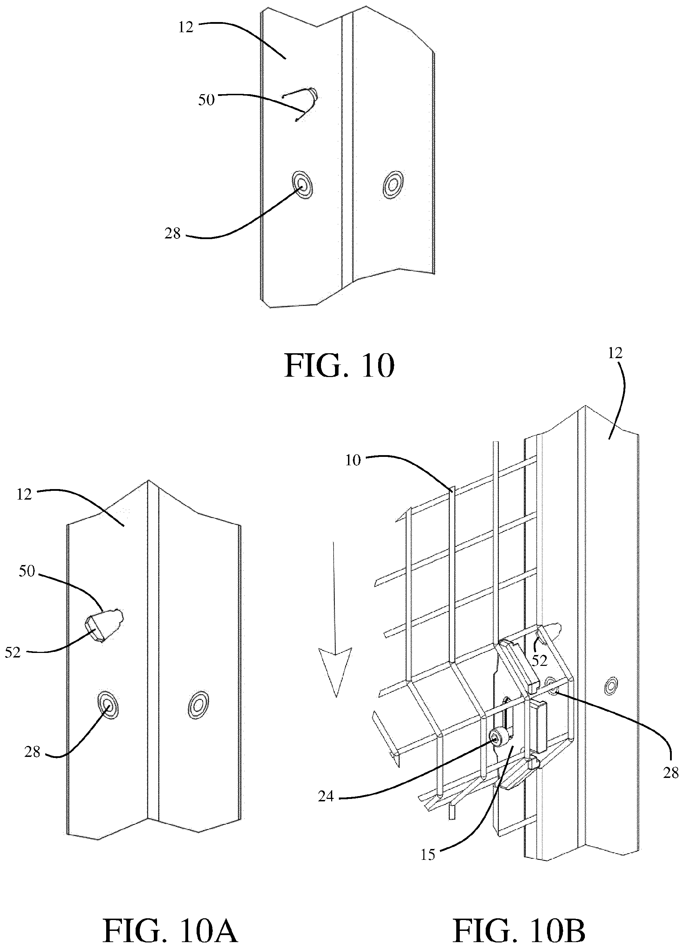

With reference to Figs. 10, 10A and 10B, these show a different embodiment of the guard according to the invention, aimed at facilitating the operation of positioning the panels on the uprights.

With reference to Fig. 10, the upright 12 is provided with a notch 50, adapted to be lifted, for example with a screwdriver, so as to form a tab 52, as shown in Fig. 10A. The tab 52 forms a hook on which the panel can be temporarily hung after the plate 15 has been fixed to the net 10, in order to facilitate the operation of fixing the panel to the upright.

In the arrangement with the panel temporarily hung to upright, shown in Fig. 10B, it is in fact easier to screw the screw 24 into the hole 28 of the upright, without clamping the screw too tightly. At this point the panel is lifted until the tab 52 is bent into the starting position on the upright 12. Upon reaching this position the screw can be clamped and fixing completed.

The system described does not prevent the panel from falling through gravity in the case in which the fixing plates are missing or tampered with.

As has been described, the fixed guard according to the invention has the advantage of comprising components that can be easily pre-assembled and do not entail the risk of being accidentally lost before final mounting of the fence or after its removal for maintenance operations.

## Claims

1. Fixed guard comprising one or more panels each supported by a pair of uprights (12), in which each panel consists of a rigid net (10) without frame, formed by a series of ribs (14) with a polygonal profile, which protrude from the plane of said net and which, in the mounted operational arrangement of the guard, extend horizontally through the panel and are spaced vertically, and in which said panels are fixed by removable plates (15) to said uprights (12) in correspondence of said ribs (14), in which each of said plates (15) has a fixing side for fixing to said net (10) and fixing means for fixing to said upright (12), each of said plates (15) is made of synthetic resin, **characterized in that** in said fixing side there is a polygonal groove (16) which corresponds to the polygonal profile of said ribs (14) of the net and extends along a perimeter portion of said plate (15), and a pair of recesses (22) that starting from said perimeter portion extend up to said groove (16), said groove (16) and said recesses (22) being operationally coupled by interference to a portion of wire (46) of said net (10).

2. Fixed guard according to claim 1, in which said polygonal profile of each of said ribs (14) is a profile in the shape of an isosceles trapezium, **characterized in that** said groove (16) of said plate (15) has a shape of an isosceles trapezium that corresponds to the profile of said ribs (14) of said net (10).

3. Fixed guard according to claim 2, in which the isosceles trapezoidal profile of each rib (16) is defined by trio of net meshes (40, 40a, 40b), **characterized in that** said trio of meshes (40, 40a, 40b) define the edge of the net that contains the portion of wire (46) operationally housed in said groove (16), such that the plate (15) is coupled by interference with each of said ribs (14).

4. Fixed guard according to claim 2 or 3, **characterized in that** each of said plates (15) has the shape of an isosceles trapezium with the larger base lying in the plane of the net (10) and the smaller base (20) lying outside the plane of the net, and in which said groove (16) in the shape of an isosceles trapezium provided in said fixing side extends along said perimeter portion of said plate (15) consisting of the oblique sides (18) and of the smaller base (20) of said plate (15) in the shape of an isosceles trapezium.

5. Fixed guard according to claim 4, **characterized in that** said pair of recesses (22) that from said perimeter portion extend to said groove (16) are made at the corners between the oblique sides (18) and the smaller base (20) of said plate (15).

6. Fixed guard according to one or more of the above claims, **characterized in that** the fixing means of each of the said plates (15) to said upright (12) consist of a screw or bolt (24) passing through a hole (26) in said plates (15) and fixed to said upright (12) either directly or by means of a fixing bracket (50).

7. Fixed guard according to claim 6, **characterized in that** said hole (26) of said fixing plate (15) is slot shaped.

8. Fixed guard according to one or more of the claims 6 or 7, **characterized in that** said screw or bolt (24) comprises a stem with a diameter smaller than the diameter of said hole (26) and a threaded end part (30) having a diameter slightly larger than the diameter of said hole (26), such that said threaded part (30) is forcibly inserted into said hole (26) and no longer removable.

9. Fixed guard according to one or more of the previous claims, **characterized in that** said upright (12) is provided with at least a notch (50) adapted to be operatively lifted to form a tab (52) on which the panel can be temporarily hung during fixing to the upright.

10. Fixed guard according to one or more of the previous claims, **characterized in that** this plate (15) is made of polyamide.

## Patentansprüche

1. Feststehender Schutz, umfassend ein oder mehrere Paneele, die jeweils von einem Paar von Pfosten (12) getragen werden, wobei jedes Paneel aus einem starren Netz (10) ohne Rahmen besteht, das durch eine Reihe von Rippen (14) mit einem polygonalen Profil gebildet wird, die aus der Ebene des Netzes herausragen und die sich in der montierten Betriebsanordnung des Schutzes horizontal durch das Paneel erstrecken und vertikal beabstandet sind, und wobei die Paneele durch abnehmbare Platten (15) an den Pfosten (12) in Übereinstimmung mit den Rippen (14) befestigt sind, wobei jede der Platten (15) eine Befestigungsseite zum Befestigen an dem Netz (10) und Befestigungsmittel zum Befestigen an dem Pfosten (12) aufweist, wobei jede der Platten (15) aus Kunstharz hergestellt ist, **dadurch gekennzeichnet, dass** sich in der Befestigungsseite eine polygonale Nut (16) befindet, die dem polygonalen Profil der Rippen (14) des Netzes entspricht und sich entlang eines Umfangsabschnitts der Platte (15) erstreckt, und ein Paar von Aussparungen (22), die sich ausgehend von dem Umfangsabschnitt bis zu der Nut (16) erstrecken, wobei die Nut (16) und die Aussparungen (22) durch Interferenz mit einem Abschnitt des Drahtes (46) des Netzes (10) wirkgekoppelt sind.

2. Feststehender Schutz nach Anspruch 1, wobei das polygonale Profil jeder der Rippen (14) ein Profil in Form eines gleichschenkligen Trapezes ist, **dadurch gekennzeichnet, dass** die Nut (16) der Platte (15) eine Form eines gleichschenkligen Trapezes aufweist, die dem Profil der Rippen (14) des Netzes (10) entspricht.

3. Feststehender Schutz nach Anspruch 2, wobei das gleichschenklige Trapezprofil jeder Rippe (16) durch ein Trio von Netzmaschen (40, 40a, 40b) definiert ist, **dadurch gekennzeichnet, dass** das Trio von Maschen (40, 40a, 40b) die Kante des Netzes definiert, die den Abschnitt des Drahtes (46) enthält, der wirksam in der Rille (16) untergebracht ist, so dass die Platte (15) durch Interferenz mit jeder der Rippen (14) gekoppelt ist.

4. Feststehender Schutz nach Anspruch 2 oder 3, **dadurch gekennzeichnet, dass** jede der Platten (15) die Form eines gleichschenkligen Trapezes aufweist, wobei die größere Basis in der Ebene des Netzes (10) liegt und die kleinere Basis (20) außerhalb der Ebene des Netzes liegt, und wobei sich die in der Befestigungsseite bereitgestellte Nut (16) in Form eines gleichschenkligen Trapezes entlang des aus den schrägen Seiten (18) und der kleineren Basis (20) der Platte (15) bestehenden Umfangsabschnitts der Platte (15) erstreckt.

5. Feststehender Schutz nach Anspruch 4, **dadurch gekennzeichnet, dass** das Paar von Aussparungen (22), die sich von dem Umfangsabschnitt zu der Nut (16) erstrecken, an den Ecken zwischen den schrägen Seiten (18) und der kleineren Basis (20) der Platte (15) ausgebildet sind.

6. Feststehender Schutz nach einem oder mehreren der vorstehenden Ansprüche, **dadurch gekennzeichnet, dass** die Befestigungsmittel jeder der Platten (15) an dem Pfosten (12) aus einer Schraube oder einem Bolzen (24) bestehen, die bzw. der durch ein Loch (26) in den Platten (15) verläuft und an dem Pfosten (12) entweder direkt oder mittels eines Befestigungsbügels (50) befestigt ist.

7. Feststehender Schutz nach Anspruch 6, **dadurch gekennzeichnet, dass** das Loch (26) der Befestigungsplatte (15) schlitzförmig ist.

8. Feststehender Schutz nach einem oder mehreren der Ansprüche 6 oder 7, **dadurch gekennzeichnet, dass** die Schraube oder der Bolzen (24) einen Schaft mit einem Durchmesser, der kleiner als der Durchmesser des Lochs (26) ist, und ein Gewindeendteil (30) mit einem Durchmesser, der geringfügig größer als der Durchmesser des Lochs (26) ist, umfasst, so dass das Gewindeteil (30) zwangsweise in das Loch (26) eingeführt und nicht mehr entfernbar ist.

9. Feststehender Schutz nach einem oder mehreren der vorstehenden Ansprüche, **dadurch gekennzeichnet, dass** der Pfosten (12) mit mindestens einer Kerbe (50) versehen ist, die dazu angepasst ist, wirksam angehoben zu werden, um eine Lasche (52) zu bilden, an der das Paneel während der Befestigung an dem Pfosten vorübergehend eingehängt werden kann.

10. Feststehender Schutz nach einem oder mehreren der vorstehenden Ansprüche, **dadurch gekennzeichnet, dass** diese Platte (15) aus Polyamid hergestellt ist.

## Revendications

1. Protection fixe comprenant un ou plusieurs panneaux, chacun supporté par un couple de montants (12), dans laquelle chaque panneau consiste en un réseau rigide (10) sans cadre, formé par une série de nervures (14) avec un profil polygonal, qui dépassent du plan dudit réseau et qui, dans l'agencement opérationnel monté de la protection, s'étendent horizontalement en travers du panneau et sont verticalement espacées, et dans laquelle lesdits panneaux sont fixés par des plaques amovibles (15) auxdits montants (12) en correspondance desdites nervures (14), dans laquelle chacune desdites plaques (15) présente un côté de fixation pour fixation audit réseau (10) et un moyen de fixation pour fixation audit montant (12), chacune desdites plaques (15) est faite de résine synthétique,
**caractérisée en ce que**, dans ledit côté de fixation, il y a une rainure polygonale (16) qui correspond au profil polygonal desdites nervures (14) du réseau et qui s'étend le long d'une portion périmétrique de ladite plaque (15), et un couple de parties en retrait (22) qui en partant de ladite portion périmétrique s'étendent jusqu'à ladite rainure (16), ladite rainure (16) et lesdites parties en retrait (22) étant couplées par interférence de manière opérationnelle à une portion de fil (46) dudit réseau (10).

2. Protection fixe selon la revendication 1, dans laquelle ledit profil polygonal de chacune desdites nervures (14) est un profil en forme d'un trapèze isocèle, **caractérisée en ce que** ladite rainure (16) de ladite plaque (15) présente une forme d'un trapèze isocèle qui correspond au profil desdites nervures (14) dudit réseau (10).

3. Protection fixe selon la revendication 2, dans laquelle le profil trapézoïdal isocèle de chaque nervure (16) est défini par un trio de mailles de réseau (40, 40a, 40b), **caractérisée en ce que** ledit trio de mailles (40, 40a, 40b) définit le bord du réseau qui contient la portion de fil (46) logée de manière opérationnelle dans ladite rainure (16), de sorte que la plaque (15) est couplée par interférence à chacune desdites nervures (14).

4. Protection fixe selon la revendication 2 ou 3, **caractérisée en ce que** chacune desdites plaques (15) présente la forme d'un trapèze isocèle, la base plus grande reposant dans le plan du réseau (10) et la base plus petite (20) reposant à l'extérieur du plan du réseau, et dans laquelle ladite rainure (16) en forme d'un trapèze isocèle prévue dans ledit côté de fixation s'étend le long de ladite portion périmétrique de ladite plaque (15) consistant en les côtés obliques (18) et en la base plus petite (20) de ladite plaque (15) en forme d'un trapèze isocèle.

5. Protection fixe selon la revendication 4, **caractérisée en ce que** ledit couple de parties en retrait (22) qui s'étendent à partir de ladite portion périmétrique jusqu'à ladite rainure (16) est réalisé au niveau des angles entre les côtés obliques (18) et la base plus petite (20) de ladite plaque (15).

6. Protection fixe selon une ou plusieurs des revendications précédentes, **caractérisée en ce que** le moyen de fixation de chacune desdites plaques (15) audit montant (12) consiste en une vis ou un boulon (24) passant à travers un trou (26) dans lesdites plaques (15) et fixé audit montant (12) soit directement soit à l'aide d'une patte de fixation (50).

7. Protection fixe selon la revendication 6, **caractérisée en ce que** ledit trou (26) de ladite plaque de fixation (15) est en forme de fente.

8. Protection fixe selon une ou plusieurs des revendications 6 ou 7, **caractérisée en ce que** ladite vis ou ledit boulon (24) comprend une tige avec un diamètre plus petit que le diamètre dudit trou (26) et une partie d'extrémité filetée (30) présentant un diamètre légèrement plus grand que le diamètre dudit trou (26), de sorte que ladite partie filetée (30) est insérée de force dans ledit trou (26) et n'est plus amovible.

9. Protection fixe selon une ou plusieurs des revendications précédentes, **caractérisée en ce que** ledit montant (12) est muni d'au moins une encoche (50) conçue pour être soulevée de manière opérationnelle pour former une languette (52) sur laquelle le panneau peut être accroché de façon temporaire pendant la fixation au montant.

10. Protection fixe selon une ou plusieurs des revendications précédentes, **caractérisée en ce que** cette plaque (15) est faite de polyamide.
